# NEUE EUROPÄISCHE PATENTSCHRIFT

(11) **EP 1 625 028 B2**
(45) Veröffentlichungstag und Bekanntmachung des Hinweises auf die Entscheidung über den Einspruch: **20.05.2015**
(45) Hinweis auf die Patenterteilung: 26.11.2008
(21) Anmeldenummer: 04733729.0
(22) Anmeldetag: 19.05.2004
(51) Int. Cl.: B60B 21/08, B60B 21/06

(54) **FELGE FÜR FAHRRÄDER UND DERGLEICHEN**
RIM FOR BICYCLES AND SIMILAR
JANTE POUR VELOS ET ANALOGUES

(30) Priorität: 21.05.2003 AT 7882003
(43) Veröffentlichungstag der Anmeldung: 15.02.2006
(73) Patentinhaber: XENTIS Composite Entwicklungs- und Produktions GmbH, 8572 Bärnbach (AT)
(72) Erfinder: POSSARNIG, Gerald, A-8010 Graz (AT); HERMANN, Manfred, A 8563 Ligist (AT); SACKL, Friedrich, A 8152 Stallhofen (AT)
(74) Vertreter: Nemec, Harald
(86) Internationale Anmeldenummer: PCT/AT2004/000176
(87) Internationale Veröffentlichungsnummer: WO 2004/103732

(56) Entgegenhaltungen:
- EP-A- 1 231 077
- FR-A- 2 701 899
- US-A- 3 433 327
- US-A- 4 314 964
- US-A- 5 184 874
- US-A- 5 249 846
- US-B1- 6 347 839

## Beschreibung

Die vorliegende Erfindung betrifft eine Felge für Fahrräder und dergleichen, welche an zumindest einer Flanke einen Bremsbereich zum Ansetzen eines Bremskörpers aufweist, welcher Bremsbereich im wesentlichen aus faserverstärktem Kunststoff besteht.

Faserverstärkte Verbundwerkstoffe finden ihren Einsatz bei mittels Muskelkraft betriebenen ein- oder zweispurigen Fahrzeugen in Leichtbauweise wie Fahrrädern für ein oder mehrere Personen (Tandems), Behindertenfahrzeugen (Rollstühle) oder Transportmitteln (Handkarren, Schubkarren). Dabei werden die Eigenschaften von hoher Festigkeit und Formstabilität bei gleichzeitig niedrigem Baugewicht ausgenützt. Bei Leichtbau-Ausführungen dieser Fahrzeuge werden anstelle der Metall-Bestandteile wie Rahmengestell, Felgen, Speichen, und Naben Faserverbundwerkstoffen ersetzt.

Die angewandten Verfahren zur Herstellung der Urformen aus faserverstärktem Kunststoff umfassen: Urformgebung durch Tränken, Wickeln, Ziehen, Laminieren, Gießen, Legen, Pressen, Erhitzen und Abkühlen von kunststoffgebundenen Fasern.

Typische Verstärkungsfaserhalbzeuge zur Herstellung sind z.B. Gewebe, Geflechte oder Schichtlagen-Anordnungen (Gelege, Wickel) aus geometrisch ausgerichteten Faser-Kunststoff-Bindungen. Duroplastische und thermoplastische Kunststoffe binden die Verstärkungsfasern aus Kohlenstoff, Graphit, Silikatglas oder Polymeren. Ebenso kommen Schaumfüllmaterialien zum Einsatz.

Bei Felgen aus formgepressten faserverstärkten Verbundmaterialien gibt es die Problematik nachteiliger Verschleißeigenschaften des Bremsbereiches an den Felgenflanken gegenüber jener bei Felgen aus Stahl oder Aluminium.

Diese Nachteile werden im Stand der Technik durch verschiedene Vor- oder Nachbehandlungs-Verfahren umgangen. Bekannte Technologien sind: Verbinden mit Alu-Felgenteilen, Aufbringen von Aluminium-Schichten (Aluminium-Blech); Galvanische Beschichtung; in den Oberflächenkunststoff eingestreute Hartstoffe (TiO₂, ZrO₂, Al₂O₃, Metall- oder Diamantteilchen); flammgespritzter Hartstoff-Auftrag (Emaillieren/Keramik).

DE 10127908 beschreibt ein Verfahren zur Herstellung einer chemikalienbeständigen Schutzschicht für Rotationskörper mit einem Grundkörper aus faserverstärktem Kunststoff und andere Rotationskörper.

Eine Vielzahl von Dokumenten des Standes der Technik (US 5 249 846 A, FR 2 701 899 DE 19739291C1, DE 3935133C2, DE 19922799A1, DE 4215756A1) beschreibt Verfahren zur Herstellung von faserverstärkten Kunststoffen.

Bei Standard Fertigungs-Technologien kommt es durch den Urformprozess zur Ausbildung von faserarmen Oberflächenschichten, da der Kunststoff in noch flüssiger Form vor der Aushärtung an die Oberfläche gedrückt wird, die Fasern jedoch die Oberfläche nur punkt-oder linienförmig berühren. Die Verstärkungsfasern (in der Regel Karbonfasern) sind gut in die duroplastischen oder thermoplastischen Kunststoffe eingebunden.

Nachteile des voranstehend beschriebenen Standes der Technik sind: Neben den ungünstigen Abriebeigenschaften unbehandelter Oberflächen-Kunststoffschichten (Kunstharzschicht), welche spezielle Kork- oder korkhältige Bremsbeläge erfordern, bewirken unterschiedliche (inhomogene) Materialeigenschaften (Wärme-Ausdehnungs-Koeffizient, Verwindungssteifigkeit, Elastizitäts-Modul) bei zusätzlichen aufgetragenen Schichten ein Abblättern, Ablösungen, oder Bildung von Bruchstellen (Sprüngen) in den Oberflächen-Beschichtungen.

Im Stand der Technik werden Oberflächenvergütungen zur Verbesserung der Chemikalien-oder Witterungsbeständigkeit von faserverstärkten Kunststoffen stets durch Schichtauftragung (durch Galvanisieren, Kaschieren, mechanische Verbindung mit Aluminium-Schichten) auf dem Grundkörper aus faserverstärktem Verbundstoff (nach oder während dem Urformen der Faservliesanordnung) vorgenommen.

Die aufgetragenen Schichten werden üblicherweise z.B. durch Polieren, Planisieren weiterbehandelt. Speziell auf den Wirkungsbereich der Bremsbeläge wird hier Wert gelegt. Eigene Verschleißindikator-Vertiefungen werden zur Anzeige des Felgenabriebes angebracht. Die Deutsche Norm DIN79100 verlangt Verschleißindikatoren für Felgen größer 50mm Durchmesser.

Die vorliegende Erfindung stellt sich zur Aufgabe, eine Felge der eingangs beschriebenen Art zur Verfügung zu stellen, welche einen oder mehrere Bremsbereiche aufweist, der hinsichtlich seiner Eigenschaften den oben angegebenen Bedingungen genügt, und welcher die beschriebenen Nachteile des Standes der Technik nicht aufweist.

Diese Aufgabe wird mit der Felge gemäß Patentanspruch 1 gelöst. Weitere bevorzugte Ausführungsformen der erfindungsgemäßen Felge sind in den Ansprüchen 2 bis 5 beschrieben.

Ein Verfahren zur Herstellung der erfindungsgemäßen Felge sowie bevorzugte Ausführungsformen davon sind in den Ansprüchen 6 bis 14 beschrieben.

Die erfindungsgemäße Felge unterscheidet sich hinsichtlich des Bremsbereiches von den Felgen des Standes der Technik dadurch, daß nicht etwa auf den Bremsbereich eine zusätzliche Schicht an geeignetem Material aufgebracht wird, sondern daß die gewünschten Eigenschaften des Bremsbereiches dadurch erreicht werden, daß die Oberfläche des Bremsbereiches einen gewissen Anteil an Verstärkungsfasern des faserverstärkten Kunststoffes aufweist.

Wie oben erwähnt, enthalten Urformen aus faserverstärktem Kunststoff an ihrer Oberfläche herstellungsbedingt üblicherweise eine Schicht, welche kaum Verstärkungsfasern enthält und praktisch ausschließlich aus der Kunststoffmatrix besteht, welche ungenügende Verschleißeigenschaften aufweist. Durch Abtragen dieser Schicht werden die im Inneren der Urform befindlichen Verstärkungsfasern freigelegt, d.h. an der Oberfläche bilden sich Querschnitte der Verstärkungsfasern, die je nach Orientierung der Fasern in der Kunststoffmatrix unterschiedliche Formen (Kreisschnitte, Ellipsenschnitte) annehmen können.

Der sich dadurch ergebende Anteil von Verstärkungsfasern an der Oberfläche des Bremsbereiches, der erfindungsgemäß mehr als 10% der Oberfläche beträgt (zur Ermittlungsmethode dieses Anteils siehe weiter unten), bewirkt, daß der Bremsbereich hinsichtlich der erforderlichen Eigenschaften vollkommen den oben genannten Anforderungen, insbesondere hinsichtlich des Bremsverhaltens und des Verschleißverhaltens genügt.

Beim Abtragen des Materials des Bremsbereiches werden Teile der verwendeten Verstärkungsfasern- oder -faserbündel quer, längs und/oder schräg zur Faserachse angeschnitten. Die so entstandenen Mikroquerschnitte bilden zusammen mit den stark reduzierten Anteilen von Verbundstoff aus Kunststoff eine Oberfläche, deren Eigenschaften hauptsächlich durch die physikalischen Eigenschaften der Fasern bestimmt wird.

Um festzustellen, welchen Anteil an Verstärkungsfasern die Oberfläche des Bremsbereiches enthält, wird die Oberfläche optisch analysiert. Dafür eignen sich alle bildgebenden Verfahren (optische Mikroskopie, Rasterelektronenmikroskop etc.), mit welchen ein ausreichender Kontrast zwischen den Querschnitten der Verstärkungsfasern und der Kunststoffmatrix erzielt werden kann. Dies kann durch eine Behandlung der Oberfläche (Reinigung, Ätzen, nicht jedoch spanabhebende Bearbeitung) erleichtert werden.

Die optische Aufnahme der Oberfläche kann mit an sich bekannten Methoden in ein computerverarbeitbares Datenformat (Pixel-Scan) umgewandelt werden und computerunterstützt ausgewertet werden. Der Pixel-Scan weist unterschiedliche Grauwerte für Verstärkungsfaser und Kunststoff-Matrix auf. Durch manuelle Bestimmung eines Schwellwertes wird zwischen Faserfläche und Matrixfläche unterschieden. Man erhält dann ein digital-kodiertes Pixelbild (gängige Bildbearbeitungsprogramme bieten diese Möglichkeit standardmäßig). Mittels eines Algorithmus werden die Grenzen zwischen den Kontrastflächen abgetastet. Es ergibt sich eine geschlossene unregelmäßige Kontur für jeden Faserdurchtritt durch die Schnittfläche.

Unter Annahme eines annähernd kreisförmigen Querschnittes der Verstärkungsfasern muß bei einem schrägem Durchschneiden der Faser die theoretische Kurve durch die Schnittfläche eine Ellipse sein, wobei die kleine Hauptachse dem Faserdurchmesser entspricht. Die freien Ellipsenparameter - große Hauptachse und Winkel der Hauptachse - werden nach dem von C.F. Gauss (17. Jh.) eingeführten Ausgleichsprinzip der Methode der kleinsten Fehlerquadrate ermittelt.

Dabei werden jene Ellipsen gesucht, welche die geringste Abweichung von den Pixelkonturen aufweisen.

Der Flächenanteil der Faserschnitte ergibt sich dann aus dem Anteil der Ellipsenflächen bezogen auf die Betrachtungsfläche. Ellipsen, deren Hauptachsen kleiner sind als der Faserdurchmesser, sind Verunreinigungen (Bruchstücke) und daher nicht zu berücksichtigen.

Die Verstärkungsfasern haben einen typischen Durchmesser von z.B. 5 µm (Kohlefaser) bzw. 14 µm (Glasfaser).

Beim erfindungsgemäßen Verfahren wird im Gegensatz zu allen gegenwärtigen Verfahren
- eine erosive (materialabtragende) Bearbeitung der Felgenflanken vorgenommen,
- bevorzugt durch spanabhebende Werkzeuge der Bremsbereich erzeugt und gestaltet
- wodurch definierte Eigenschaften (Bremsverhalten, Verschleißarmut) entstehen

Ähnliche Bearbeitungs-Verfahren von Karbonfaser-Verbundstoffen finden auf dem Gebiet der Raum- und Luftfahrttechnik zur Formgestaltung und in der Fertigung von Bremsscheiben für Kraftfahrzeuge Anwendung.

Die Verbesserungen durch die gegenständliche Erfindung gegenüber dem Stand der Technik sind gegeben durch die homogenen physikalischen Eigenschaften von Grundmaterial und Material-Oberfläche der so gefertigten und behandelten Felgen oder Laufräder, die guten Abriebfestigkeits-, Wärmeleit- und Bremseigenschaften, die Einsparung von Kaschier- und ähnlichen Material-Auftragungsprozessen, und dadurch Beseitigung aller möglicher Ablösungsprozesse, wie z.B. das Abblättern der Schichten aufgrund der unterschiedlichen Wärmeausdehnungskoeffizienten.

Die materialabtragende Behandlung des Felgengrundkörpers bringt Faserquerschnitte der Verstärkungsfasern ganz an die Oberfläche der Felge. Die Bearbeitung erfolgt bevorzugt an beiden Felgenflanken und exakt parallel bezüglich der Umlaufrichtung des Rades, sodaß den Bremsbelägen stets ein konstanter Bremswiderstand entgegenwirkt. Vibrationen werden weitgehend verhindert und der Abriebwiderstand ist um den ganzen Umfang konstant. Die hohe Dichte an Verstärkungsfasern ergibt eine extrem harte, verschleißarme Zone im Brems-Wirkungsbereich. Mögliche eingebrachte Riefen dienen dem besseren Verhalten bei Nässe oder als Indikator.

Die Oberfläche steht in direkter Verbindung mit der Körpergrundstruktur, störende verschleißbehaftete Kunststoff (Kunstharz)-Schichten werden durch das Bearbeitungsverfahren zum Teil oder ganz beseitigt. Zugleich wird die Güte der Formgebung durch die Vorproduktionsschritte sichtbar, die Qualität der Urformgebung spiegelt sich in der Oberfläche wieder. Die Güte des Laminiervorganges und des vorangegangenen Urformprozesses zeigt sich in der Struktur der Oberfläche, wodurch Mess-und Kontrollmöglichkeiten für die Qualitätssicherung entstehen.
Das ist ein weiterer Unterschied zu Beschichtungstechnologien, wo Überzüge die Beschaffenheit des Basismaterials verbergen.

Die Herstellungstechnologien der Urform-Erzeugung sind hier nicht im Detail ausgeführt, es sind aber grundsätzlich alle üblichen Prozesse der faserverstärkten Verbundmaterial-Erzeugung möglich, welche die Grundzusammensetzungen aus Endlos-Graphit, Karbon- , Kohle- Silikat- und Polymerfasern und thermoplastischen oder duroplastischen Grundstoffen enthalten.

Günstig für die Durchführung der genannten Erfindung ist eine möglichst konsistente homogene Beschaffenheit der Kunststoff-Fasermatrix des Bremsbereiches über den gesamten Umfang der Felgenurform.

Der faserverstärkte Kunststoff des Bremsbereiches enthält als Verstärkungsfasern bzw. Fasergewebe bevorzugt solche aus der Gruppe umfassend natürliche und synthetische Fasern, insbesondere aus Kohlenstoff (Karbon, Graphit), Glas, Aramid, keramischen Grundstoffen wie Bornitrid, Siliziumkarbid oder Silikat, oder Kombinationen aus diesen Fasern. Sie können in Form von mit flüssigem oder verfestigtem (konsolidiertem) Kunststoff getränkten Geweben, Wickeln oder Gelegen aus solchen Fasern eingesetzt werden.

Beispiele für Faseraufbauten sind Wickelmuster mit hohen Musterzahlen, also vielen Überschneidungen, Flechtmuster und Korbwicklungen. Die Zwischenräume sind durch das Tränkungsmaterial aufgefüllt. Durch die nachfolgenden Konsolidierungsprozesse unter Druck und Erwärmung verfestigen sich die Verstärkungsfasern durch Verschmelzen mit dem Kunststoffanteil.

Der die Matrix des faserverstärkten Kunststoffes bildende Kunststoff ist bevorzugt ausgewählt aus der Gruppe umfassend thermoplastische Kunststoffe, wie abgewandelte Naturstoffe, Homo- und Copolymere oder Polymerblends von Cellulose-Nitrat, CelluloseAcetat, Cellulose-Ether, oder Cellulose-Mischether, Polyamide, Polycarbonate, Polyester, Polyvinylester, Polyolefine, Polyphenylenoxide, Ionomere, Polysulfone, Polyvinylacetale, Polyvinylchlorid, Polyvinylidenchlorid, Polyvinylalkohol, Vinyl-Ester, Polymethylmethacrylat, chlorierte Polyether, Polyacrylnitril, Polystyrol, Polyacetale, Fluorkunststoffe, Polyvinylacetat, Polyetherketone, Acrylnitril, Butadien-Styrol-Copolymere, Styrol-Acrylnitril-Copolymere, Polyterephthalate, lineare Polyurethane, Polyethylen (PE), Polypropylen und Polyamid und/oder Duroplasten wie Gießharze aus Epoxydharz, Methacrylatharz, Phenacrylharz, Polyesterharz, Phenolharz, Isocyanatharz, Melamin-Formaldehydharz, Vinylester sowie Polyurethane in Polymer-, Monomerstruktur oder Mischform, sowie Mischformen aus thermoplastischen und duroplastischen Kunststoffen.

Der Anteil von Verstärkungsfasern am Gesamtvolumen des faserverstärkten Kunststoffes kann zwischen 10% und 90% betragen, die Anordnung geschichtet in Lagen oder gewebt sein. Gerüstkonstruktionen mit aufgeschäumten Kunststoffen, gefüllten Hohlräumen, definierten Welligkeiten zur Stabilitätserhöhung oder Vakuum- und Wabentechniken können ebenfalls angewendet werden, um weitere Gewichtseinsparungen oder Steifigkeitserhöhungen zu erreichen.

Die eingesetzten Kunststoffe und Verstärkungsfasern weisen zweckmäßigerweise eine Zersetzungstemperatur bzw. Glasübergangstemperatur auf, die höher liegt als die beim Bremsvorgang auftretenden Temperaturen.

Mögliche Zusatzstoffe im Kunststoffmaterial sind Rußpartikel, MoS-Partikel, Teilchen aus Titan- oder Zirkonoxide, aus Al₂O₃, Oxidmischungen sowie Carbide, wie SiC und B₄C, Bornitrid, Diamant sowie Mischungen aus diesen Materialien.

Nach der Urformprozessierung und dem vollständigem Aushärten unter Druck und Erwärmung erfolgt die mechanische Veredelung der Oberfläche der Flanke von Felge oder Laufrad aus faserverstärktem Kunststoff. In diesem Zustand befindet sich üblicherweise ein Kunststoffüberschuß an den äußersten Schichten der noch unbearbeiteten Felge.

In der Folge werden erfindungsgemäß mittels spanender oder erosiver Bearbeitung die äußeren Schichten des Faserverbundstoffes mechanisch abgetragen, wobei es zur definierten Abtragung der Außenseite des Kunststoff- und Faservliesüberschusses kommt.

Dabei bekommt die so bearbeitete Oberfläche eine Struktur aus überwiegendem Anteil (bevorzugt >50%) an Verstärkungsfasermaterial und einem Minimum an Kunststoff.

Je nach Schichtung (Web-, Legetechnik) der Faserverbund-Vorprodukte (z.B. flächiges Verstärkungsfaserhalbzeug) und deren Anordnung im Urform-Prozess liegen Faserflächenbündel in bestimmten Ausrichtungen in der Oberfläche.

Ein Teil der Fasern wird beim Abtragen des Materials vollständig durchtrennt, und der Faserquerschnitt normal zur Faserachse bildet ein Mikroelement der Oberfläche. Andere Teilstücke von parallelen Faserbündeln werden in Längsrichtung angeschnitten, wobei im Idealfall ein größtmöglicher Anteil zur Oberfläche beiträgt. Die Orientierung dieser Faserbündeloberflächen hat die gleiche Regelmäßigkeit wie die Faserordnung im ursprünglichen Geflecht oder Gelege.

Die Anordnung der Geflecht- oder Gelegeorientierung kann in radialer und/oder dazu orthogonaler Richtung sein, sie kann einen bestimmten Winkel zur radialen Richtung aufweisen (z.B. 90°) oder zufällig erfolgen. Je rotationssymmetrischer die Anordnung der Fasern, desto gleichmäßiger werden die Bremseigenschaften um den gesamten Umfang erfolgen. Durch die Art der mechanischen Bearbeitung wird weiters die Rauhigkeit bzw. Glätte der Oberfläche bestimmt; auch Riefen zur Steigerung der Bremseigenschaften bei Nässe sind möglich.

Bevorzugt wird auf die Bearbeitungstechnik des erfindungsgemäßen Verfahrens schon im Urformprozess Rücksicht genommen. Die notwendige Zugabe an Verstärkungsfaserhalbzeug, die ideale Ausrichtung zur Bearbeitungs- und zur Bremskraftrichtung und die Verfeinerung des Konsolidierungsprozesses im Bereich der zu bearbeitenden Oberfläche werden bevorzugt an das nachfolgende erfindungsgemäße Verfahren angepaßt.

Die Konsolidierung der Grundstoffe sollte besonders im Bereich der Felge durch geeignete Druck- und Temperaturverhältnisse erfolgen, sodaß eine ausreichende und homogene Bildung der Struktur gewährleistet ist. Die Formgebung der Felge erfolgt bevorzugt bei einem Druck von 0,5 bis 1000 bar und durch Beheizung der Form.

Das erfindungsgemäße Abtragen des Materials des Bremsbereiches kann durch Spanen mit geometrisch bestimmter oder unbestimmter Schneide erfolgen. Bei ersterem sind vorzugsweise Drehen, Fräsen, Feilen, und Schaben für die Bereitung der Bremsfläche geeignet, bei letzterem sind es Verfahren wie Schleifen, Bandschleifen, Ziehschleifen, Gleitschleifen, Super-Finish, Läppen, Strahlspanen, und Polieren.

Erfindungsgemäße Felgen sind zur Verwendung bei Felgen oder Laufrädern in Leichtbauweise aus faserverstärkten Verbundmaterialien geeignet. Dementsprechend betrifft die vorliegende Erfindung in einem weiteren Aspekt die Verwendung der erfindungsgemäßen Felgen in einem muskelkraftbetriebenen ein- oder mehrspurigen Fahrzeug ausgewählt aus Gruppe umfassend Fahrräder, wie z.B. Straßenrennräder, Mountain-, City- oder Trekkingbikes oder Tandems, Rollstühle, Hand- oder Schubkarren, Roller, Dreiräder, und/oder in motorbetriebenen Klein- oder Leichtfahrzeugen ausgewählt aus der Gruppe umfassend Elektro-Fahrzeuge, Solarkraft-Fahrzeuge, Behinderten-Fahrzeuge, Mopeds und Motorfahrräder.

Es hat sich gezeigt, daß beim Einsatz der erfindungsgemäßen Felgen in den genannten Anwendungsgebieten eine gute Ableitung der Erwärmung durch die Bremseinwirkung erfolgt, der Verschleiß der Oberfläche extrem gering ist und sich vorwiegend auf die (Gummi-)Bremsbeläge beschränkt.

Die vorliegende Erfindung wird anhand der nachfolgenden Figuren erläutert.
- Fig.1: zeigt eine typische Form einer Laufradfelge aus faserverstärkem Kunststoff.
- Fig.2: zeigt einen Schnitt durch die Felge aus Fig.1 mit dem typischen Profil nach der erfindungsgemäßen Oberflächenbearbeitung.
- Fig.3: zeigt die typische Material-Beschaffenheit des Verbundmateriales nach dem Urformprozess in der Felgenflanke vor und nach der erfindungsgemäßen Bearbeitung.
- Fig.4 bis Fig. 8: zeigen Beispiele der erfindungsgemäßen Bearbeitung der Felgenflanke:

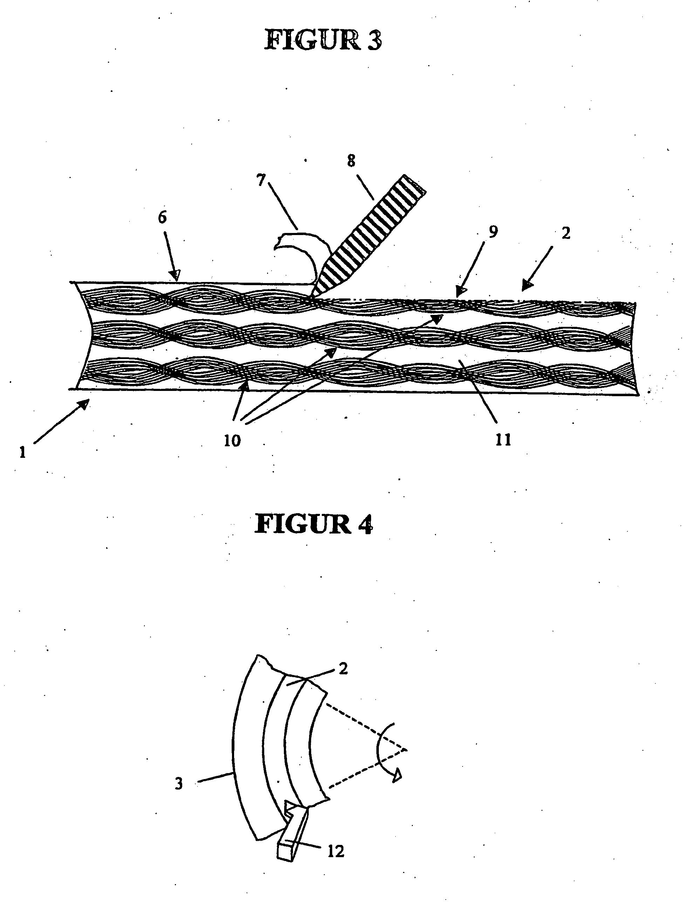

- Fig.4: zeigt die Bearbeitung der in Drehung versetzten Felge mittels Drehstahl-Werkzeug.

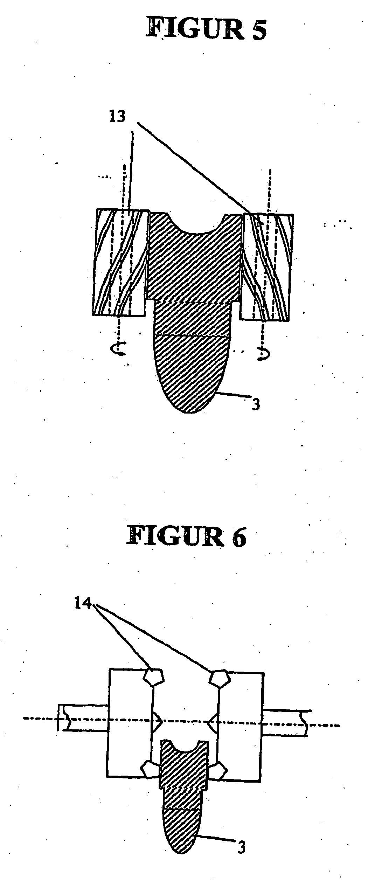

- Fig.5: zeigt die Bearbeitung durch 2 achsparallele Walzenfräser bei rotierendem Felgen-Vorschub.
- Fig.6: zeigt die Bearbeitung der Felgenflanke mit Stirnfräser.

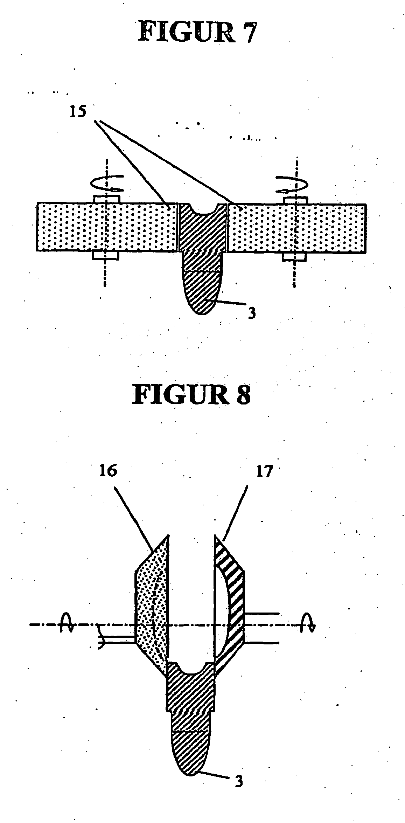

- Fig.7: und Fig.8 zeigen Herstellungs-Methoden mit rotierenden Schleifwerkzeugen:
- Fig.7: zeigt die Bearbeitung mit Zylinderschleifscheiben.
- Fig.8: zeigt die Bearbeitung mit Topfscheiben.

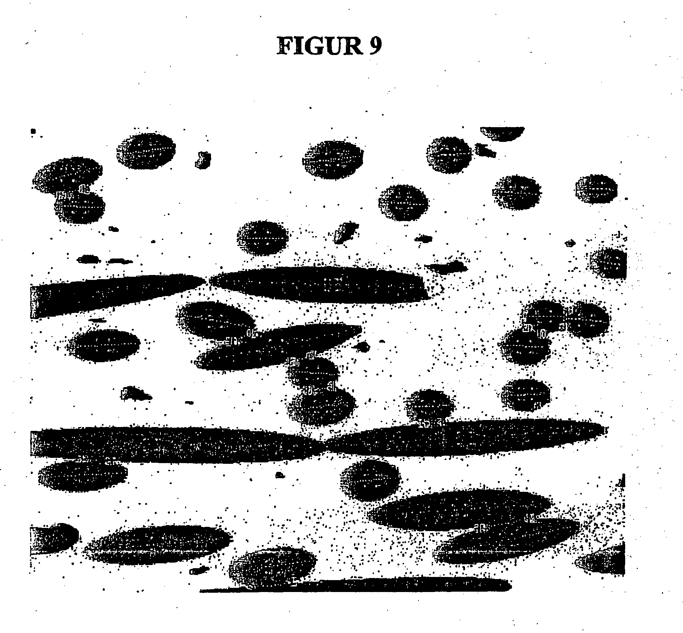

- Fig.9: zeigt die computerunterstützt verarbeitete optische (vergrößerte) Aufnahme der Oberfläche eines Bremsbereiches einer erfindungsgemäßen Felge.

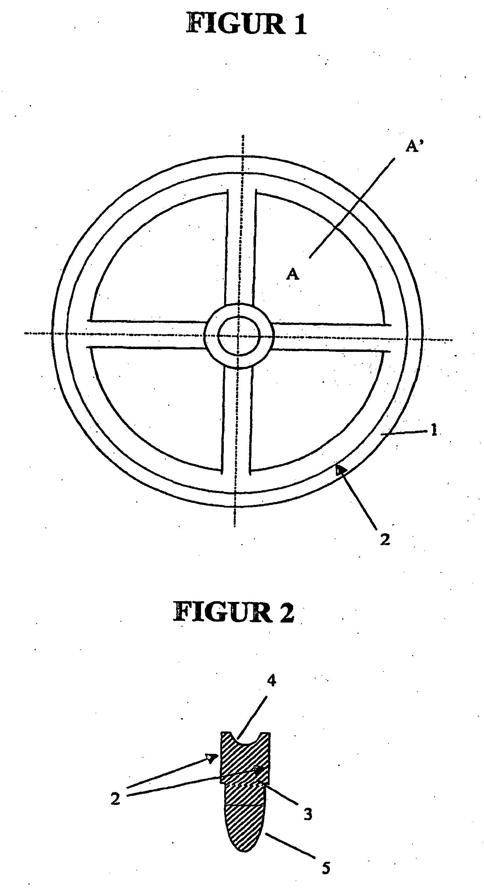

Die in Fig.1 gezeigte Laufradform stellt das prinzipielle Aussehen eines Laufrades aus Faserverbundwerkstoff mit vier angeformten Speichen dar. Der Außenring stellt die Felge 1 dar, welche einen im Normalfall abgerundeten Übergangsbereich zur Radmitte hin aufweist sowie einen umlaufparallelen Bremsbereich 2, wo für gewöhnlich die Bremsbeläge ansetzen. Außen wird der Reifen montiert.

Die Felge 1 besteht in der in den Figuren gezeigten Ausführungsform bevorzugt zur Gänze im wesentlichen aus faserverstärktem Kunststoff.

Der Schnitt A-A' ist in Fig.2 skizziert und zeigt den Querschnitt der Felge. Die erfindungsgemäß verarbeitete umlaufparallele Oberfläche des Bremsbereichs 2 befindet sich nahe dem äußeren Ende der Felgenflanke. Das Innere 3 der Felge besteht aus faserverstärktem Verbundmaterial. Der Reifen wird in der Führungsvertiefung (Felgenbett 4) angebracht. Am radial inneren meist verjüngenden Teil der Felge 5 wird in der Regel keine mechanische Nachbearbeitung vorgenommen.

In Fig.3 ist das Grundprinzip der erfindungsgemäßen Bearbeitung des Bremsbereiches 2 durch ein spanabhebendes Werkzeug 8 dargestellt.

Der Schicht-Aufbau aus flächigem Verstärkungsfaserhalbzeug 10 und Kunststoff 11 im Verbundwerkstoff ist skizziert.

Die Urform weist an der Oberfläche 6 (vor der Bearbeitung) eine Schicht auf, die wesentlichen nur aus der Kunststoffmatrix besteht und keinen bzw. praktisch keinen Anteil an Verstärkungsfasern enthält. Diese Schicht hat ungenügende physikalische Eigenschaften.

Wird nunmehr diese Schicht mit einem Werkzeug 8 unter Bildung eines Span 7 abgetragen, so werden die Verstärkungsfasern 10 freigelegt und es bildet sich eine Oberfläche 9 mit dem erfindungsgemäß vorgesehenen Anteil an Verstärkungsfasern von mehr als 10%. Das Abtragen des Materials kann solange fortgesetzt werden, bis sich ein gewünschter Anteil an Verstärkungsfasern ergibt.

Im folgenden sind einige Verfahren des Materialabtragens beschrieben.

Fig.4 zeigt die Grundanordnung der Bearbeitung des Felgenkörpers 3 mit einem Drehwerkzeug 12, welches auf den in Drehung versetzten Laufradkörper 3 gegen die Drehrichtung angesetzt wird und den Bremsbereich 2 unter Freilegen der Verstärkungsfasern bearbeitet.

Dabei werden die oberste Schicht aus Kunststoff sowie weitere Schichten solange abgetragen, bis ausreichend viele Fasern des verwendeten flächigen Faserhalbzeuges außen zu liegen kommen und eine über den Umfang der Felge (im Bremsbereich) konstante Oberflächenstruktur bei gleichzeitiger hoher Umfangsparallelität entsteht.

Hier liegt der Gesichtspunkt auf eine Fertigung einer konstanten Felgenbreite (Toleranzen typischerweise 0,1 mm über den Gesamtumfang, im Bremsbereich).

Federgelagerte Führungswalzen im Arbeitsbereich mit einstellbarem Endanschlag können zur Stabilisierung und Zielbreiten-Justierung eingesetzt werden. Bei Felgen ohne zentrale Antriebsmöglichkeit kann der Antrieb auch über Walzen erfolgen. Die Bearbeitung der beiden Felgenflanken kann gleichzeitig mit zwei Drehwerkzeugen oder hintereinander erfolgen.

Fig.5 zeigt die Verwendung von Walzfräsern 13 als Fräswerkzeuge. Dabei wird der zu bearbeitende Felgenkörper 3 durch zwei exakt parallel angeordneten Walzenfräser 15 mit senkrechter Arbeitsspindel im Zielbreitenabstand über den ganzen Umfang nach und nach in ihrer Breite reduziert, bis die genannten Oberflächeneigenschaften entstehen.

Fig.6 zeigt eine Bearbeitungsvariante mit Stirnfräsern 14, wobei die Rotationsachse der Fräser exakt parallel zur Rotationsachse des Felgen-Körpers 3 sein muß, um hohe Planparallelität zu erreichen.

Darüber hinaus sind Formfräser einsetzbar, welche neben der Bremsflächengestaltung auch das Felgenprofil formgebend verändern. Auch Rundtischfräsmaschinen oder Koordinatenfräsmaschinen können zur Bearbeitung eingesetzt werden.

Fig.7 und Fig.8 zeigen Bearbeitungsverfahren mit Schleifscheiben geeigneter Körnung, wodurch der Felgenkörper 3 auf die Sollbreite mit den beabsichtigten Oberflächeneigenschaften geschliffen wird. Geeignet sind Zylinderschleifscheiben 15 oder Topfscheiben 16 (im Schnitt 17) mit unterschiedlichen Körnungen, wobei die rotierenden Schleifkörper auf die zu bearbeitende Felgenoberfläche geführt werden, wodurch es zur abrasiven Formgebung bei gleichzeitiger Oberflächenveredelung kommt.

Neben rotierenden Schleifkörpern können auch oszillierende Schleifkörper die Materialabtragung durchführen. Die Bewegungen können radial, lateral, kreisend oder exzenterbahnförmig ausfallen.

Bei der Abbildung der Oberfläche eines Bremsbereiches einer erfindungsgemäßen Felge in Figur 9 sind deutlich die durch das Abtragen des Materials freigelegten Faserquerschnitte (dunkel) gegenüber der hellen Kunststoffmatrix erkennbar. Die Schnitte sind ellipsen- bis kreisförmig. Aus den Schnittformen lassen sich die Flächen der Faserschnitte und daraus der Gesamtanteil der Fasern an der Oberfläche berechnen. Dieser Anteil liegt im Beispiel der Figur 9 weit über 10%.

### Bezugszeichenliste

- 1: Felge
- 2: Bremsbereich
- 3: Felgenkörper
- 4: Felgenbett
- 5: Felgenform
- 6: Oberfläche des Bremsbereiches (vor der mech. Bearbeitung)
- 7: Span
- 8: Spanwerkzeug (Keil)
- 9: mechanisch veredelte Oberfläche
- 10: flächiges Verstärkungsfaserhalbzeug
- 11: Kunststoff/Kunstharz, konsolidierter Grundstoff
- 12: Drehwerkzeug (Drehstahl)
- 13: Walzfräser
- 14: Stirnfräser
- 15: Schleifscheiben (zylindrisch)
- 16: Schleifscheiben (topfförmig)
- 17: Schnitt durch 16

## Patentansprüche

1. Felge (1) für Fahrräder und dergleichen, mit zumindest einem Bremsbereich (2) an zumindest einer Flanke der Felge (1) zum Ansetzen eines Bremskörpers, welcher Bremsbereich (2) im wesentlichen aus faserverstärktem Kunststoff in Form eines geschichteten flächigen Verstärkungsfaserhalbzeuges besteht, **dadurch gekennzeichnet, daß** die Oberfläche (9) des Bremsbereiches (2) einen Anteil an durch Abtragen des Materials des Bremsbereiches freigelegter Verstärkungsfaser (10) von mehr als 10 % aufweist.

2. Felge nach Anspruch 1, **dadurch gekennzeichnet, daß** der Anteil an Verstärkungsfaser (10) 10 % bis 90 %, bevorzugt 50 % bis 90% beträgt.

3. Felge nach Anspruch 1 oder 2, **dadurch gekennzeichnet, daß** die Felge (1) an beiden Flanken einen Bremsbereich (2) aufweist, dessen Oberfläche (9) einen Anteil an Verstärkungsfaser (10) von mehr als 10% aufweist.

4. Felge nach einem der Ansprüche 1 bis 3, **dadurch gekennzeichnet, daß** die gesamte Felge (1) im wesentlichen aus faserverstärktem Kunststoff besteht.

5. Verfahren zur Herstellung einer Felge (1) nach einem der vorhergehenden Ansprüche, umfassend die Schritte:
- Herstellen einer Urform der Felge mit zumindest einem Bremsbereich (2) an zumindest einer Flanke der Felge, welcher Bremsbereich (2) im wesentlichen aus faserverstärktem Kunststoff in Form eines geschichteten flächigen Verstärkungsfaserhalbzeuges besteht
- Abtragen des Materials des Bremsbereiches (2), bis an der Oberfläche (9) des Bremsbereiches (2) Verstärkungsfasern bzw. Verstärkungsfaserquerschnitte (10) freigelegt werden
- gegebenenfalls weiteres Abtragen des Materials des Bremsbereiches (2), bis der gewünschte Anteil an Verstärkungsfasern (10) an der Oberfläche (9) erreicht wird.

6. Verfahren nach Anspruch 5, **dadurch gekennzeichnet, daß** das Abtragen des Materials des Bremsbereiches (2) mit spanabhebenden Verfahren erfolgt.

7. Verfahren nach Anspruch 6, **dadurch gekennzeichnet, daß** das Abtragen des Materials des Bremsbereiches (2) durch ein Spanungswerkzeug oder mehrere, gleiche oder verschiedene Spanungswerkzeuge und durch eines oder mehrere Verfahren ausgewählt aus der Gruppe umfassend Drehen, Fräsen, Feilen, Schaben, Schleifen, Bandschleifen, Ziehschleifen, Gleitschleifen, Super-Finish, Läppen, Strahlspanen oder Polieren erfolgt.

8. Verfahren nach einem der Ansprüche 5 bis 7, **dadurch gekennzeichnet, daß** zum Abtragen des Materials des Bremsbereiches (2) ein drehstahlartiges Werkzeug (12) zum Materialabtragen an die rotierende Felgenflanke (3) geführt wird.

9. Verfahren nach einem der Ansprüche 5 bis 7, **dadurch gekennzeichnet, daß** das Material des Bremsbereiches (2) mit einem oder mehreren gegenlaufenden Walzfräser(n) (13) oder Formfräser(n) oder einem oder mehrere Stirnfräser(n) (14) abgetragen wird, wobei der Vorschub durch eine relative Drehbewegung der Felge (1) zum Werkzeug (13,14) erfolgt.

10. Verfahren nach einem der Ansprüche 5 bis 7, **dadurch gekennzeichnet, daß** das Material des Bremsbereiches (2) mit einer oder mehreren rotierenden Schleifscheiben (15,16) abgetragen wird, wobei der Vorschub durch eine relative Drehbewegung der Felge (1) zum Werkzeug (15,16) erfolgt.

11. Verfahren nach einem der Ansprüche 5 bis 10, **dadurch gekennzeichnet, daß** die Urform der Felge (1) auf beiden Flanken einen im wesentlichen aus faserverstärktem Kunststoff bestehenden Bremsbereich (2) aufweist und das Material der Bremsbereiche (2) an beiden Seiten der Felge abgetragen wird.

12. Verfahren nach Anspruch 11, **dadurch gekennzeichnet, daß** das Abtragen des Materials der Bremsbereiche (2) so erfolgt, daß umlaufparallele Bremsbereiche (2) auf den beiden Felgenflanken gebildet werden.

13. Verfahren nach einem der Ansprüche 5 bis 12, **dadurch gekennzeichnet, daß** durch zusätzliches Abtragen des Materials des Bremsbereiches (2) Vertiefungen wie z.B. Rillen oder Riefen im Bremsbereich (2) gebildet werden.

14. Verwendung einer Felge (1) gemäß einem der Ansprüche 1 bis 4 in einem muskelkraftbetriebenen ein- oder mehrspurigen Fahrzeug ausgewählt aus Gruppe umfassend Fahrräder, wie z.B. einem Straßenrennräder, Mountain-, City- oder Trekkingbikes oder Tandems, Rollstühle, Hand- oder Schubkarren, Roller, Dreiräder, und/oder in motorbetriebenen Klein- oder Leichtfahrzeugen ausgewählt aus der Gruppe umfassend Elektro-Fahrzeuge, Solarkraft-Fahrzeuge, Behinderten-Fahrzeuge, Mopeds und Motorfahrräder.

## Claims

1. A rim (1) for bicycles and the like, comprising at least one braking area (2) on at least one flank of the rim (1) for placing a braking member, said braking area (2) essentially consisting of fibre-reinforced plastic in the form of a layered semifinished reinforcing fibre sheet product, **characterized in that** the surface (9) of the braking area (2) exhibits an amount of exposed reinforcing fibre (10) of more than 10%, the reinforcing fibre being exposed by removal of the material of the braking area.

2. A rim according to claim 1, **characterized in that** the amount of reinforcing fibre (10) amounts to 10% to 90%, preferably 50% to 90%.

3. A rim according to claim 1 or 2, **characterized in that** the rim (1) comprises, on both flanks, a braking area (2) the surface (9) of which exhibits an amount of reinforcing fibre (10) of more than 10%.

4. A rim according to any of claims 1 to 3, **characterized in that** the entire rim (1) essentially consists of fibre-reinforced plastic.

5. A process for the manufacture of a rim (1) according to any of the preceding claims, comprising the steps of:
- producing an original model of the rim comprising at least one braking area (2) on at least one flank of the rim, said braking area (2) essentially consisting of fibre-reinforced plastic in the form of a layered semifinished reinforcing fibre sheet product,
- removing the material of the braking area (2) until reinforcing fibres and reinforcing fibre cross-sections (10), respectively, are exposed on the surface (9) of the braking area (2),
- optionally removing the material of the braking area (2) further until the desired amount of reinforcing fibres (10) has been achieved on the surface (9).

6. A process according to claim 5, **characterized in that** the removal of the material of the braking area (2) is effected by cutting processes.

7. A process according to claim 6, **characterized in that** the removal of the material of the braking area (2) is effected by means of a cutting tool or several identical or different cutting tools or by means of one or several methods selected from the group comprising turning, milling, filing, scraping, grinding, belt grinding, honing, vibratory grinding, super-finishing, lapping, jet cutting or polishing.

8. A process according to any of claims 5 to 7, **characterized in that** a cutting-chisel-like tool (12) for material removal is guided onto the rotating rim flank (3) in order to remove the material of the braking area (2).

9. A process according to any of claims 5 to 7, **characterized in that** the material of the braking area (2) is removed by means of one or several counterrotating plain milling cutter(s) (13) or form cutter(s) or one or several face milling cutter(s) (14), with the advance being effected by a relative rotation of the rim (1) toward the tool (13,14).

10. A process according to any of claims 5 to 7, **characterized in that** the material of the braking area (2) is removed by means of one or several rotating abrasive wheels (15,16), with the advance being effected by a relative rotation of the rim (1) toward the tool (15,16).

11. A process according to any of claims 5 to 10, **characterized in that** the original model of the rim (1) comprises, on both flanks, a braking area (2) essentially consisting of fibre-reinforced plastic and the material of the braking areas (2) is removed on both sides of the rim.

12. A process according to claim 11, **characterized in that** the removal of the material of the braking areas (2) is effected such that circumferentially parallel braking areas (2) are formed on the two rim flanks.

13. A process according to any of claims 5 to 12, **characterized in that** recesses such as, e.g., grooves or furrows are formed in the braking area (2) by additionally removing the material of the braking area (2).

14. The use of a rim (1) according to any of claims 1 to 4 in a single-track or multi-track vehicle driven by muscular power, selected from the group comprising bicycles such as road racing bicycles, mountain, city or tracking bikes or tandems, wheelchairs, pushcarts or wheelbarrows, scooters, tricycles, and/or in motor-driven small or lightweight vehicles selected from the group comprising electric vehicles, solar power vehicles, vehicles for the disabled, mopeds and motor-assisted bicycles.

## Revendications

1. Jante (1) pour vélos et similaires, comprenant au moins une zone de freinage (2) sur au moins un flanc de la jante (1) pour le placement d'un corps de freinage, laquelle zone de freinage (2) est constituée essentiellement de plastique renforcé de fibre sous la forme d'un demi-produit en fibre de renfort plan et stratifié, **caractérisée en ce que** la surface (9) de la zone de freinage (2) présente une fraction de fibre de renfort (10) mise à nue par retrait du matériau de la zone de freinage, supérieure à 10 %.

2. Jante selon la revendication 1, **caractérisée en ce que** la fraction de fibre de renfort (10) représente entre 10 % et 90 %, de préférence entre 50 % et 90 %.

3. Jante selon la revendication 1 ou 2, **caractérisée en ce que** la jante (1) présente sur les deux flancs une zone de freinage (2), dont la surface (9) présente une fraction de fibre de renfort (10) supérieure à 10 %.

4. Jante selon l'une quelconque des revendications 1 à 3, **caractérisée en ce que** l'ensemble de la jante (1) est essentiellement à base de plastique renforcé de fibre.

5. Procédé pour la fabrication d'une jante (1) selon l'une quelconque des revendications précédentes, comprenant les étapes suivantes :
- fabrication d'une forme initiale de la jante comprenant au moins une zone de freinage (2) sur au moins un flanc de la jante, laquelle zone de freinage (2) est essentiellement à base de plastique renforcé de fibre sous la forme d'un demi-produit en fibre de renfort plan et stratifié
- enlèvement du matériau de la zone de freinage (2) jusqu'à ce que des fibres de renfort respectivement des sections de fibre de renfort (10) soient mises à nue sur la surface (9) de la zone de freinage (2)
- éventuellement nouvel enlèvement du matériau de la zone de freinage (2) jusqu'à ce que la fraction souhaitée de fibres de renfort (10) sur la surface (9) soit atteinte.

6. Procédé selon la revendication 5, **caractérisé en ce que** l'enlèvement du matériau de la zone de freinage (2) s'effectue avec un procédé par enlèvement de copeaux.

7. Procédé selon la revendication 6, **caractérisé en ce que** l'enlèvement du matériau de la zone de freinage (2) s'effectue par un outil d'usinage par enlèvement de copeaux ou plusieurs outils d'usinage par enlèvement de copeaux identiques ou différents et par un ou plusieurs procédés sélectionnés dans le groupe suivant : tournage, fraisage, limage, raclage, rectification, ponçage à la bande, honage, rectification par glissement, super finition, rodage, enlèvement de copeaux au jet ou polissage.

8. Procédé selon l'une quelconque des revendications 5 à 7, **caractérisé en ce que**, pour l'enlèvement du matériau de la zone de freinage (2), un outil (12) de type outil de tour est guidé sur le flanc de jante (3) rotatif pour l'enlèvement de matériau.

9. Procédé selon l'une quelconque des revendications 5 à 7, **caractérisé en ce que** le matériau de la zone de freinage (2) est enlevé avec une ou plusieurs fraises mères (13) ou fraises à profiler tournant dans le sens opposé ou une ou plusieurs fraises à surfacer (14), l'avancement s'effectuant par un mouvement de rotation relatif de la jante (1) par rapport à l'outil (13, 14).

10. Procédé selon l'une quelconque des revendications 5 à 7, **caractérisé en ce que** le matériau de la zone de freinage (2) est enlevé avec une ou plusieurs meules (15, 16) rotatives, l'avancement s'effectuant par un mouvement de rotation relatif de la jante (1) par rapport à l'outil (15, 16).

11. Procédé selon l'une quelconque des revendications 5 à 10, **caractérisé en ce que** la forme initiale de la jante (1) présente sur les deux flancs une zone de freinage (2) constituée essentiellement de plastique renforcé de fibre et le matériau des zones de freinage (2) est enlevé sur les deux côtes de la jante.

12. Procédé selon la revendication 11, **caractérisé en ce que** l'enlèvement du matériau des zones de freinage (2) s'effectue de telle sorte que des zones de freinage (2) parallèles en rotation sont formées sur les deux flancs de jante.

13. Procédé selon l'une quelconque des revendications 5 à 12, **caractérisé en ce que** des cavités, par exemple des gorges ou des cannelures, sont formées dans la zone de freinage (2) par l'enlèvement supplémentaire du matériau de la zone de freinage (2).

14. Utilisation d'une jante (1) selon l'une quelconque des revendications 1 à 4 dans un véhicule à une voie ou à plusieurs voies, entraîné par la force musculaire, dans le groupe comprenant des vélos, par exemple des vélos de course, des VTT, des vélos de ville ou des vélos pour trekking ou des tandems, des fauteuils roulants, des charrettes à bras ou des brouettes, des patinettes, des tricycles et/ou dans des véhicules petits ou légers actionnés par moteur sélectionnés dans le groupe comprenant des véhicules électriques, des véhicules à énergie solaire, des véhicules pour handicapés, des vélomoteurs et cyclomoteurs.
